# EUROPEAN PATENT APPLICATION

(11) **EP 2 314 902 A2**
(43) Date of publication of application: **27.04.2011**
(21) Application number: 10180432.6
(22) Date of filing: 27.09.2010
(51) Int. Cl.: F16K 31/02

(54) **Fluid control valve**

(30) Priority: 21.10.2009 JP 2009242309; 28.01.2010 JP 2010017408
(71) Applicant: AISIN SEIKI KABUSHIKI KAISHA, Kariya-shi, Aichi 448-8650 (JP)
(72) Inventor: Ito, Yoshikuni, Kariya-shi Aichi 448-8650 (JP); Sakai, Shoichi, Kariya-shi Aichi 448-8650 (JP); Nonaka, Kenji, Kariya-shi Aichi 448-8650 (JP)
(74) Representative: Kramer - Barske - Schmidtchen

(57) **Abstract**

A fluid control valve (100) is provided. The fluid control valve (100) is interposed in a fluid flow passage, and includes a temperature sensing part (50) which is provided in a fluid of the fluid flow passage, and which is configured to operate based on a temperature of the fluid; a heating element (60) which is configured to heat the temperature sensing part (50); and a shielding part (70) which is capable of shielding the temperature sensing part (50) from the fluid.

## Description

### TECHNICAL FIELD

The disclosure relates to a fluid control valve interposed in a flow passage and including a temperature sensing part which is provided in a fluid and operates based on the temperature of the fluid, and a heating element which heats the temperature sensing part, wherein circulation of the fluid is controlled by operation of the temperature sensing part, and a fluid control valve interposed in a flow passage and including a valve to open and close the flow passage.

A vehicle is generally provided with a fluid control valve including a temperature sensing part which operates based on the temperature of engine cooling water. When the vehicle interior is warmed by a vehicle interior heater, if the temperature of the cooling water is a predetermined level, the fluid control valve is opened by the temperature sensing part to circulate the warmed engine cooling water to the vehicle interior heater.

In such a fluid control valve, in a case where it is necessary to heat the vehicle interior using the vehicle interior heater after engine starting while the engine is cold, since the engine cooling water is at a low temperature or is on the rise in temperature, that is, the temperature thereof is equal to or less than a predetermined level, the valve is not opened, and thus the engine cooling water is not circulated to the vehicle interior heater.

In view of the above, for example, JP-A-2003-328753 discloses to employ a fluid control valve to circulate the engine cooling water on the rise in temperature to the vehicle interior heater by the structure capable of forcibly heating a temperature sensing part, which is provided in the cooling water, using a heating element thereby to open the valve.

However, in the fluid control valve disclosed in JP-A-2003-328753, since the temperature sensing part is exposed to the cold cooling water at engine starting while the engine is cold, the heat generated by the heating element is radiated to the cooling water, and the heating of the temperature sensing part is slow, so that the valve opening of the valve body is delayed. For this reason, there is a problem in that the engine cooling water is not circulated to the vehicle interior heater, and thus the warming in the vehicle interior by the vehicle interior heater is delayed.

In the meantime, JP-A-2005-256742 discloses a fluid valve mechanism provided in a flow passage through which a fluid flows and including a valve body which opens the flow passage when a thermal expansion element stored therein is expanded according to the temperature of the fluid and closes the flow passage by an urging force of a first elastic body when the thermal expansion element is contracted. The valve body includes a body portion storing the thermal expansion element therein, a seal valve having an opening portion which is closed by engagement with the body portion, and a second elastic body which opens the opening portion by releasing the engagement of the body portion and the seal valve when the thermal expansion body leaks from the body portion.

However, in the fluid valve mechanism disclosed in JP-A-2005-256742, since the valve body includes the body portion and the seal valve which can be relatively moved, the structure of the valve body is complicated. In addition, there is a problem in that the structure thereof is complicated since the valve body includes the first elastic body and the second elastic body.

A need thus exists for a fluid control valve capable of quickly and effectively heating a temperature sensing part, and a fluid control valve capable of holding a valve part in an open state with a simple structure.

### SUMMARY

According to an aspect of this disclosure, a fluid control valve interposed in a fluid flow passage, includes: a temperature sensing part which is provided in a fluid of the fluid flow passage, and which is configured to operate based on a temperature of the fluid; a heating element which is configured to heat the temperature sensing part; and a shielding part which is capable of shielding the temperature sensing part from the fluid.

According to the above configuration, since the temperature sensing part which is provided in the fluid can be shielded from the fluid by the shielding part, it is possible to prevent the temperature sensing part from radiating the heat to the fluid, thereby quickly and effectively heating the temperature sensing part.

In the above fluid control valve, the shielding part, may shield the temperature sensing part from the fluid when the temperature sensing part is at a predetermined position.

In the above fluid control valve, the shielding part may include a cover member which covers the temperature sensing part.

According to this configuration, since the shielding part includes the cover member to cover the temperature sensing part, it is possible to prevent heat radiation of the temperature sensing part by the cover member, thereby quickly and effectively heating the temperature sensing part.

The above fluid control valve may further include a housing formed with a flow passage though which the fluid flows; and a valve part which is moved by an operation of the sensing part to open and close the flow passage. The temperature sensing part may be movable integrally with the valve part, and the cover member may be fixed to the housing.

According to this configuration, since the temperature sensing part which can be moved integrally with the valve part is covered with the cover member integrally provided at the housing, it is possible to provide the cover member with a simple structure.

In the above fluid control valve, the cover member may cause the temperature sensing part to expose to the fluid when the valve part opens the flow passage to allow the fluid to flow.

According to this configuration, since the cover member is configured to expose the temperature sensing part to the fluid when the valve part allows the fluid to circulate, the overheating of the temperature sensing part by the heating of the heating element is suppressed by the fluid.

The above fluid control valve may further include a holding member which is configured to hold the valve part in an opened state when the valve part is moved by a predetermined amount in a direction of opening the flow passage.

According to this configuration, since the valve part is held in the opened state only by the holding member, the valve part can be held in the opened state with a simple structure.

In the above fluid control valve, the holding member may be provided to a cap which is a separate member from the valve part, and fixed to the valve part.

According to this configuration, since the holding member is provided with the cap which is separate member from the valve part and is fixed to the valve part, a new valve part is not necessarily provided.

In the above fluid control valve, the valve part may be provided rotatably to open and close the flow passage.

According to this configuration, the fluid control valve may include the rotatable valve part.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram schematically illustrating an engine cooling circuit to which a fluid control valve according to illustrative embodiments disclosed here are applied;
Fig. 2 is a diagram schematically illustrating a valve-closed state of a fluid control valve according to a first illustrative embodiment disclosed here;
Fig. 3 is a diagram schematically illustrating a valve-opened state of a fluid control valve according to the first illustrative embodiment disclosed here;
Fig. 4 is a diagram schematically illustrating a valve-closed state of a fluid control valve according to a second illustrative embodiment disclosed here;
Fig. 5 is a diagram schematically illustrating a valve-opened state of a fluid control valve according to the second illustrative embodiment disclosed here;
Fig. 6 is a diagram schematically illustrating a valve-closed state of a fluid control valve according to a third illustrative embodiment disclosed here;
Fig. 7 is a diagram schematically illustrating a valve-opened state of a fluid control valve according to the third illustrative embodiment disclosed here;
Fig. 8 is a diagram schematically illustrating a valve-closed state of a fluid control valve according to a fourth illustrative embodiment disclosed here;
Fig. 9 is a diagram schematically illustrating a valve-opened state of a fluid control valve according to the fourth illustrative embodiment disclosed here;
Fig. 10 is a diagram schematically illustrating a valve-closed state of a fluid control valve according to a fifth illustrative embodiment disclosed here;
Fig. 11 is a diagram schematically illustrating a valve-opened state of a fluid control valve according to the fifth illustrative embodiment disclosed here;
Fig. 12 is a diagram schematically illustrating an abnormal state of a fluid control valve according to the fifth illustrative embodiment disclosed here;
Fig. 13 is a diagram schematically illustrating a locked state of a fluid control valve according to the fifth illustrative embodiment disclosed here;
Fig. 14 is a diagram schematically illustrating a fluid control valve to show a modified illustrative embodiment of the locking structure shown in Fig. 13;
Fig. 15 is a flowchart illustrating a control flow of a fluid control valve according to the fifth illustrative embodiment disclosed here;
Fig. 16 is a diagram schematically illustrating a valve-closed state of a fluid control valve according to a sixth illustrative embodiment disclosed here;
Fig. 17 is a diagram schematically illustrating a valve-opened state of a fluid control valve according to the sixth illustrative embodiment disclosed here; and
Fig. 18 is a diagram schematically illustrating a locked state of a fluid control valve according to the sixth illustrative embodiment disclosed here.

### DETAILED DESCRIPTION

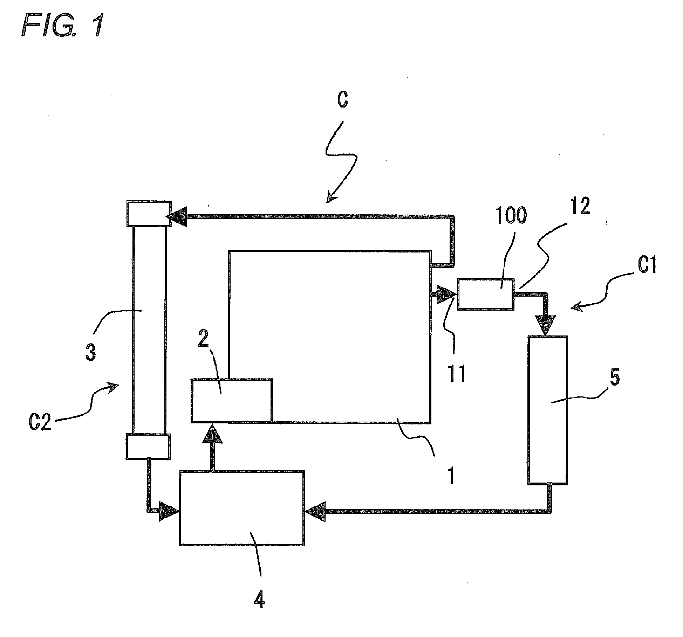

Hereinafter, a first illustrative embodiment will be described with reference to Figs. 1 to 3.

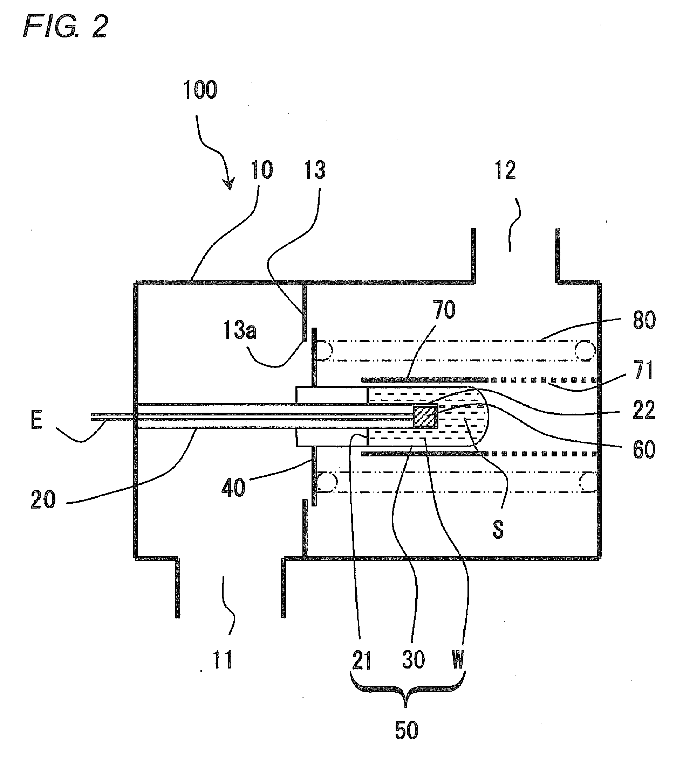

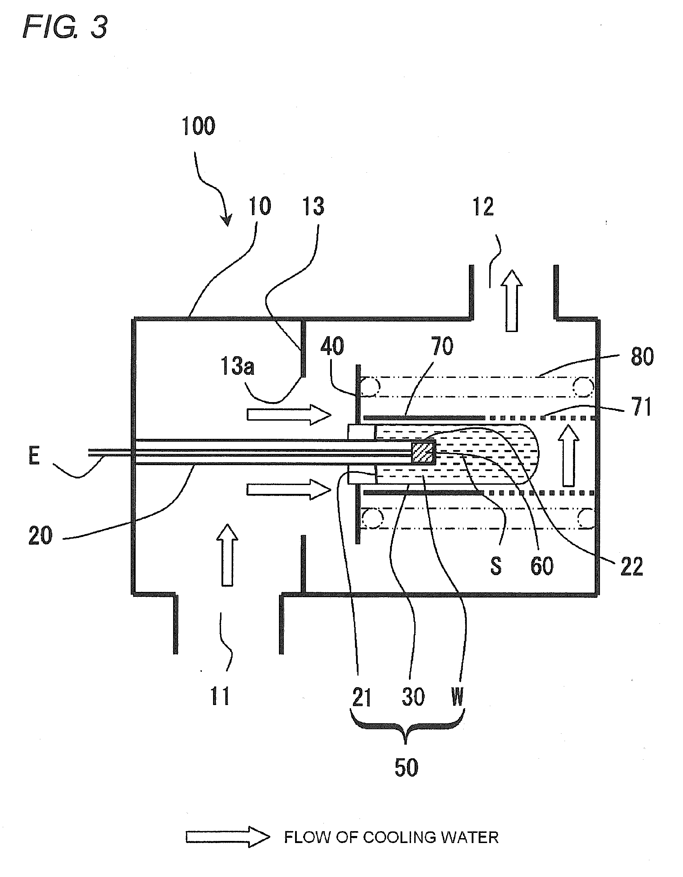

Fig. 1 is a diagram schematically illustrating an engine cooling circuit C provided with a fluid control valve 100 according to the first illustrative embodiment disclosed here. Fig. 2 is a diagram schematically illustrating a valve-closed state of the fluid control valve 100 according to the first illustrative embodiment disclosed here. Fig. 3 is a diagram schematically illustrating a valve-opened state of the fluid control valve 100 according to the first illustrative embodiment disclosed here.

The engine cooling circuit C includes an engine 1, a pump 2, a radiator 3, a thermostat 4, a vehicle interior heater 5, and the fluid control valve 100. Cooling water (fluid) is circulated in the engine cooling circuit C by the pump 2 which is driven by the engine 1.

The fluid control valve 100 and the vehicle interior heater 5 are provided (interposed) in a heater circuit (fluid flow passage) C1 which substantially communicates with the pump 2 from the engine 1.

The radiator 3 and the thermostat 4 are provided in a radiator circuit C2 which communicates with the pump 2 from the engine 1. If the temperature of the cooling water is raised to a predetermined level after the engine 1 starts, the thermostat 4 is opened, and the cooling water is circulated in the radiator 3 and then radiates the heat to the radiator 3, so that the cooling water is cooled.

The fluid control valve 100 includes a housing 10 having an inlet port 11 formed at one end and an outlet port 12 formed at the other end, and the housing 10 is provided with a partition 13 having a through-hole (flow passage) 13a penetrating a central portion thereof between the inlet port 11 and the outlet port 12. The cooling water is circulated from the inlet port 11 to the outlet port 12 through the through-hole 13a.

A cylindrical piston 20 is fixed to the inside of the housing 10, and is extended to protrude through the through-hole 13 a. A heating element 60 is provided at a tip end portion 22 of the piston 20. The heating element 60 generates heat by power supply. A power line E which supplies the power to the heating element 60 passes through the piston 20, and is led outside the housing 10. A substantially cylindrical case 30 with a bottom is extrapolated to the tip end side of the piston 20 to be movable relative to the piston 20, in which the piston 20 penetrates through one end portion of the cylindrical case 30. An annular valve body 40 is fixed to the outer circumference of the case 30 so as to be integrally moved with the case 30, and has the outer diameter larger than an inner diameter of the through-hole 13a to open and close the through-hole 13a. A disc-shaped partition plate 21 is provided at the outer circumference of the piston 20 to define a space S in the case 30 and seal the space in a liquid-tight manner. The space S is filled with thermally expandable wax W. A temperature sensing part 50 is configured by the case 30, the wax W and the partition plate 21. When the wax W is heated and expanded by the heating element 60, the case 30 is moved in a direction away from the piston 20, so that the temperature sensing part 50 operates.

A cylindrical cover 70 is integrally fixed to the housing 10 at the outside of the case 30 in a diameter direction, with a gap between the outer circumference of the case 30 and the cover 70. Alternatively, the gap may not be provided between the outer circumference of the case 30 and the cover 70. The portion of the cover 70 at the housing 10 side is continuously provided with a lattice 71, and is fixed to the housing 10. The lattice 71 decreases the resistance of the cover 70 against the circulation of the cooling water in the housing 10. In addition, when the temperature sensing part 50 is moved in a direction away from the piston 20, that is, when the valve body 40 formed integrally with the temperature sensing part 50 opens the through-hole 13a to allow the cooling water to circulate, the lattice 71 can cause the temperature sensing part 50 to expose to the cooling water. A coil spring 80 is provided at the outer side of the cover 70 in the diameter direction to close the through-hole 13a by urging the valve body 40 towards the partition 13, in which one end portion of the coil spring is engaged with the valve body 40 and the other end is engaged with the housing 10.

Next, the operation of the first illustrative embodiment will now be described.

In a case where heating of the vehicle interior by the vehicle interior heater 5 is required after engine starting while the engine 1 is cold, the power is supplied to the heating element 60 via the power line E, so that the heating element 60 generates heat. The wax W filled in the space S which is defined by the partition plate 21 in the case 30 is heated by the heating of the heating element 60, and thus the temperature of the wax W is raised, so that the wax is expanded. As shown in Fig. 3, by the expansion of the wax W, the case 30 is moved relative to the piston 20 in the direction away from the piston 20 to enlarge the space S, and thus the valve body 40 fixed to the outer circumference of the case 30 is moved in the direction away from the partition 13. Due to the movement of the valve body 40, the through-hole 13a is opened to allow the cooling water to circulate, and thus the vehicle interior is warmed by the circulation of the cooling water on the rise in temperature in the vehicle interior heater 5. The temperature sensing part 50 moved by the expansion of the wax W is exposed to the cooling water via the lattice 71 of the cover 70.

In this instance, since the wax W filled in the space S is covered with the cover 70, the generated heat of the heating element 60 is not radiated to the cooling water to effectively heat the temperature sensing part 50 (wax W), so that the temperature of the temperature sensing part 50 is raised. In this instance, if the cover 70 is made of a thermal insulating material, the generated heat is hardly radiated to the cooling water, and thus the temperature sensing part 50 can be more effectively heated, thereby raising the temperature thereof. The temperature sensing part 50 moved due to the expansion of the wax W is exposed to the cooling water via the lattice 71 of the cover 70 to prevent the temperature sensing part 50 from being overheated due to the heating of the heating element 60.

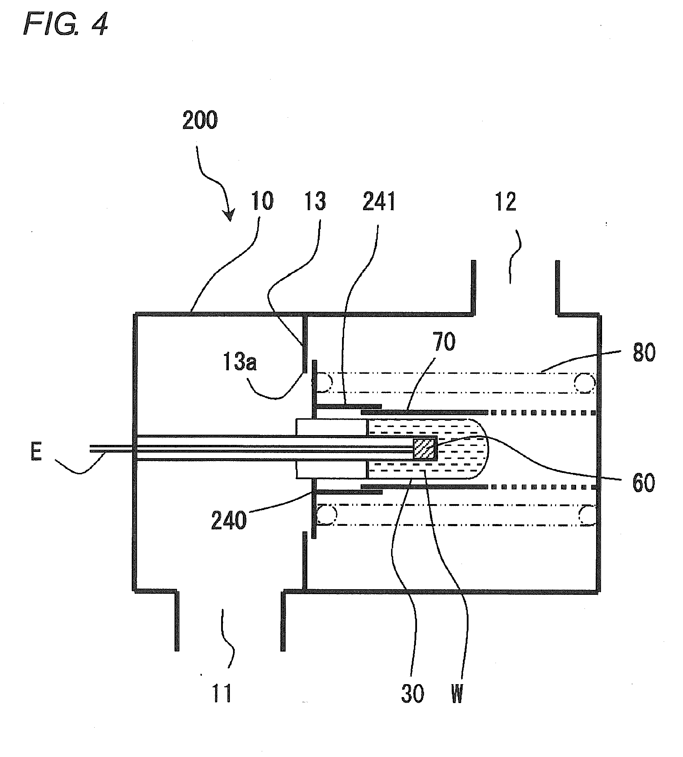

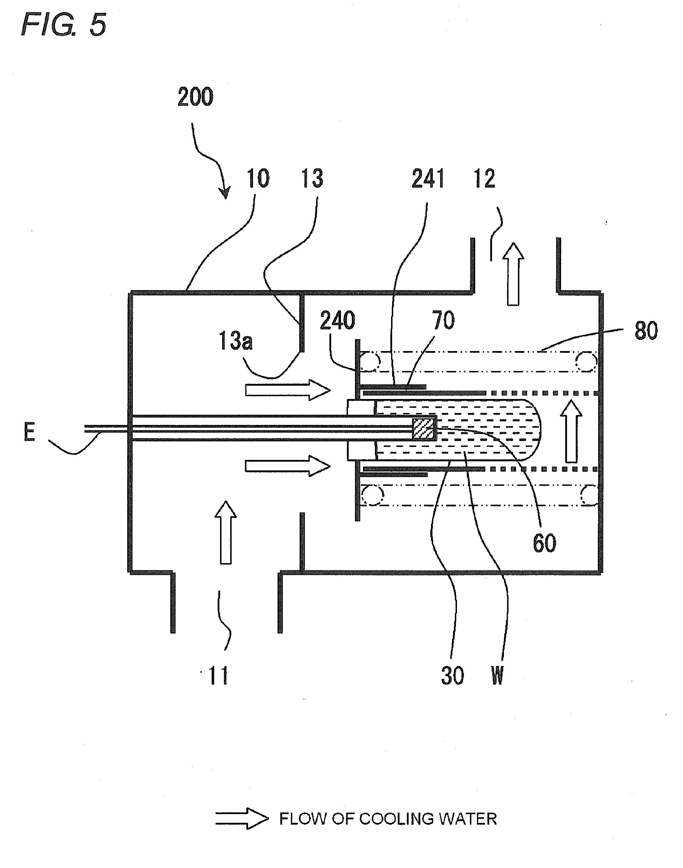

Next, a second illustrative embodiment will be described with reference to Figs. 4 and 5.

Fig. 4 is a diagram schematically illustrating a valve-closed state of a fluid control valve 200 according to the second illustrative embodiment disclosed here. Fig. 5 is a diagram schematically illustrating a valve-opened state of the fluid control valve 200 according to the second illustrative embodiment disclosed here.

The second illustrative embodiment is substantially identical to the first illustrative embodiment, except for the shape of a valve body 240, and therefore, the same configuration is not described herein.

The valve body 240 is integrally provided with a cylinder 241 which extends towards the cover 70 to cover a portion of the cover 70. Since the case 30 is covered with the cylinder 241 and the cover 70, the cooling water is not in contact with the case 30.

Next, the operation of the second illustrative embodiment will now be described.

In a case where heating of the vehicle interior by the vehicle interior heater 5 is required after engine starting while the engine 1 is cold, the power is supplied to the heating element 60 via the power line E, so that the heating element 60 generates heat. Since the whole case 30 is covered with the cylinder 241 and the cover 70 so as not to in contact with the cooling water, the temperature of the wax W is quickly and effectively raised.

While changing from the valve-closed state in Fig. 3 to the valve-opened state in Fig. 4, the cooling water flows through the through-hole 13a. However, since the whole case 30 is covered with the cover 70, the temperature of the wax W is quickly and effectively raised, so that the valve body 240 can secure the necessary opening rate of the valve. Accordingly, the necessary flow rate of the cooling water can be secured to warm the vehicle interior in early stage.

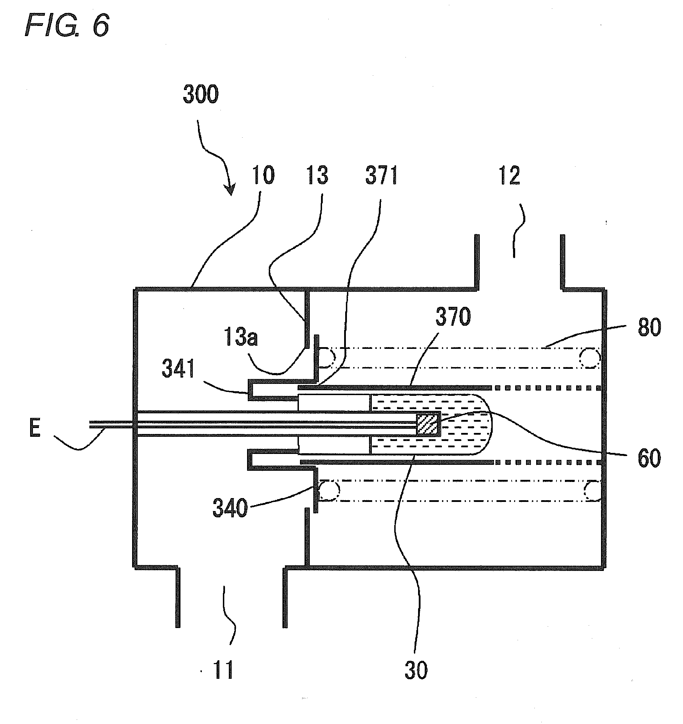

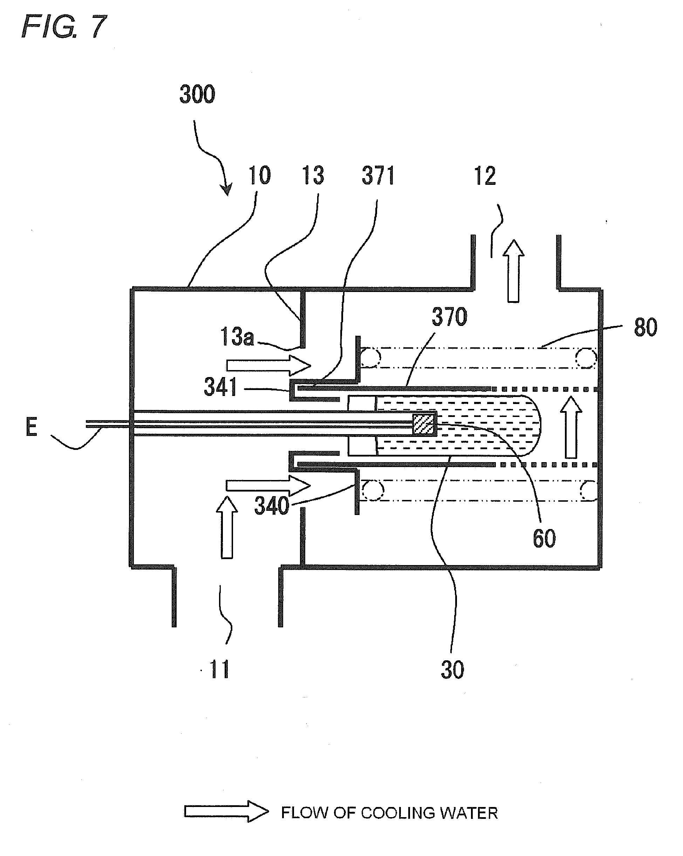

Next, a third illustrative embodiment will be described with reference to Figs. 6 and 7.

Fig. 6 is a diagram schematically illustrating a valve-closed state of a fluid control valve 300 according to the third illustrative embodiment disclosed here. Fig. 7 is a diagram schematically illustrating a valve-opened state of the fluid control valve 300 according to the third illustrative embodiment disclosed here.

The third illustrative embodiment is substantially identical to the first illustrative embodiment, except for the shape of a valve body 340 and a cover 370, and the same configuration is not described herein.

The cover 370 is formed to cover the whole length of the case 30 in an axial direction. Since the case 30 is covered with the cover 370, the cooling water is not in contact with the case 30.

The valve body 340 is provided with a concave-shaped concave portion 341 in a circumferential direction to receive the end portion 371 at a portion opposite to an end cover 371 of the cover 370. In a case where the valve body 340 is opened, the end portion 371 of the cover 370 is received in the concave portion 341, so that the valve body 340 can move, without interfering with the cover 370, to open and close the through-hole 13a.

Next, the operation of the third illustrative embodiment will now be described.

In a case where heating of the vehicle interior by the vehicle interior heater 5 is required after engine starting while the engine 1 is cold, the power is supplied to the heating element 60 via the power line E, so that the heating element 60 generates the heat. Since the whole case 30 is covered with the cover 370 so as not to be in contact with the cooling water, the temperature of the wax W is quickly and effectively raised.

While changing from the valve-closed state in Fig. 5 to the valve-opened state in Fig. 6, the cooling water flows through the through-hole 13a. However, since the end portion 371 of the cover 370 is received in the concave portion 341, the valve body 340 can secure the necessary opening rate of the valve, without interfering with the cover 370. Accordingly, the necessary flow rate of the cooling water can be secured to warm the vehicle interior in early stage.

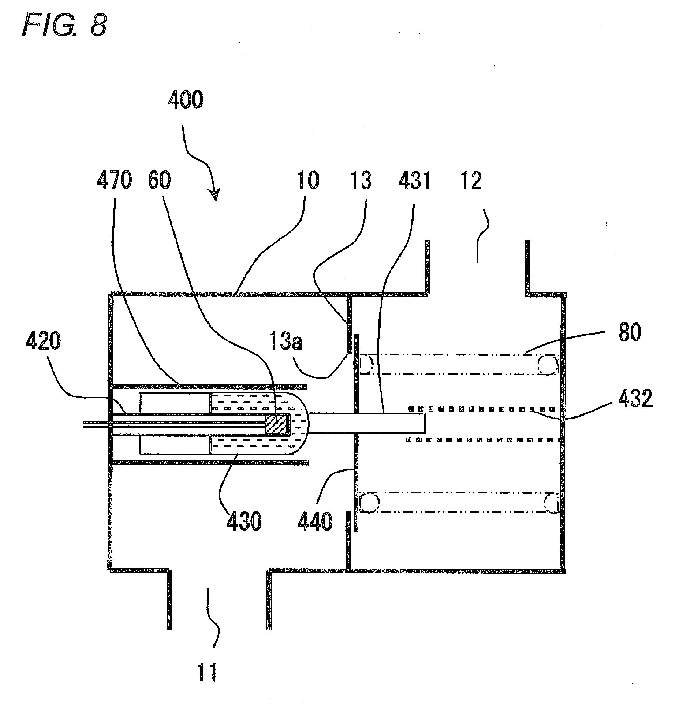

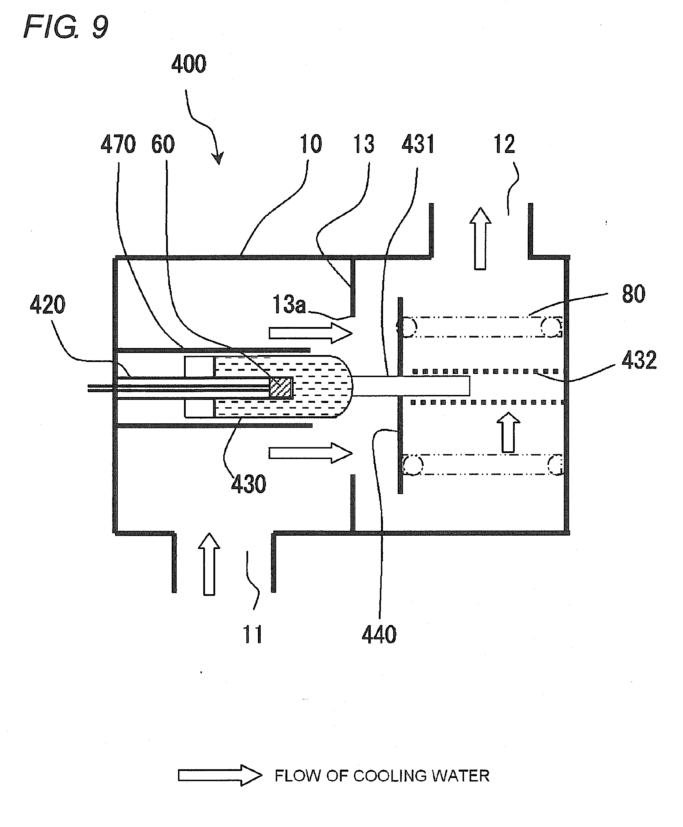

Now, a fourth illustrative embodiment will be described with reference to Figs. 8 and 9.

Fig. 8 is a diagram schematically illustrating a valve-closed state of a fluid control valve 400 according to the fourth illustrative embodiment disclosed here. Fig. 9 is a diagram schematically illustrating a valve-opened state of the fluid control valve 400 according to the fourth illustrative embodiment disclosed here.

The fourth illustrative embodiment is substantially identical to the first illustrative embodiment, except for the position relationship of a case 430 and the coil spring 80 and the arrangement relationship of a valve body 440 and a cover 470, and the same configuration is not described herein.

The cover 470 extends from a fixing side of the housing 10 which fixes a piston 420. The case 430 is a fixing side of the piston 420, and is arranged at a position opposite to the coil spring 80, with the valve body 440 being interposed between the case 430 and the coil spring 80.

The case 430 is provided with a shaft 431 in a direction away from the piston 420. The valve body 440 is integrally provided with the outer circumference of the shaft 431. A lattice-shaped cylinder 432 is integrally fixed to the housing 10 in the tip end direction of the piston 420 to guide the movement of the shaft 431, with a gap being provided between the cylinder 432 and the outside of the shaft 431 in the diameter direction thereof. Alternatively, there may be no gap between the shaft 431 and the cylinder 432.

Next, the operation of the fourth illustrative embodiment will now be described.

In a case where heating of the vehicle interior by the vehicle interior heater 5 is required after engine starting while the engine 1 is cold, the power is supplied to the heating element 60 via the power line E, so that the heating element 60 generates heat. Since the whole case 430 is covered with the cover 470 so as not to be in contact with the cooling water, the temperature of the wax W is quickly and effectively raised.

While changing from the valve-closed state in Fig. 8 to the valve-opened state in Fig. 9, the cooling water flows through the through-hole 13a. However, since the cover 470 extends from the fixing side of the piston 420 and the case 430 is provided at the position opposite to the coil spring 80, with the valve body 440 being interposed between the coil spring 80 and the case 430, the surrounding of the through-hole 13a is substantially vast, so that the flow resistance of the cooling water is decreased. Accordingly, the cooling water is circulated in the vehicle interior heater 5 to warm the vehicle interior in early stage.

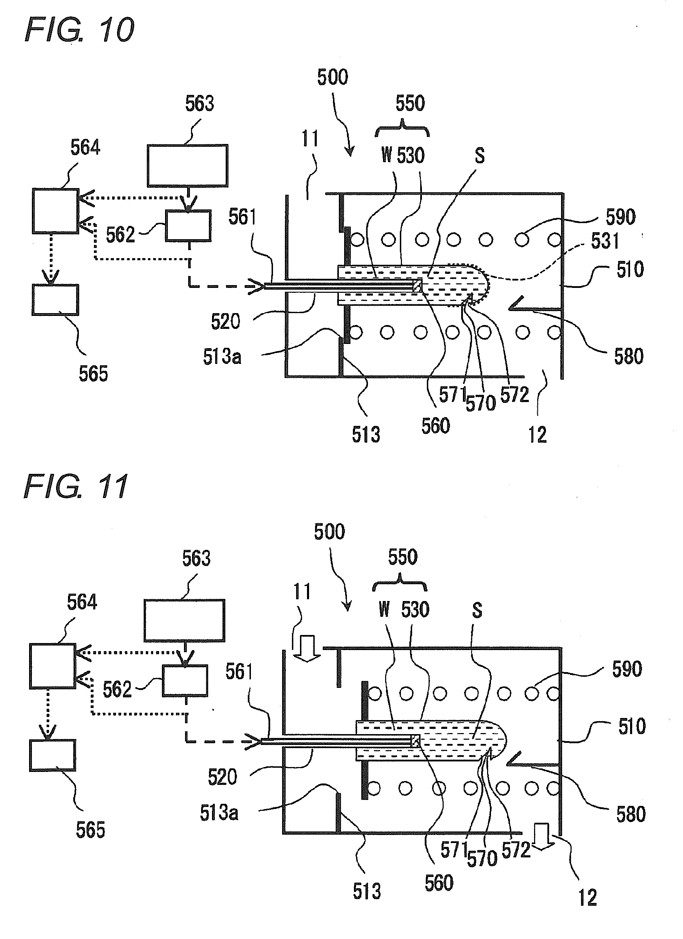

Now, a fifth illustrative embodiment will be described with reference to Figs. 10 to 15.

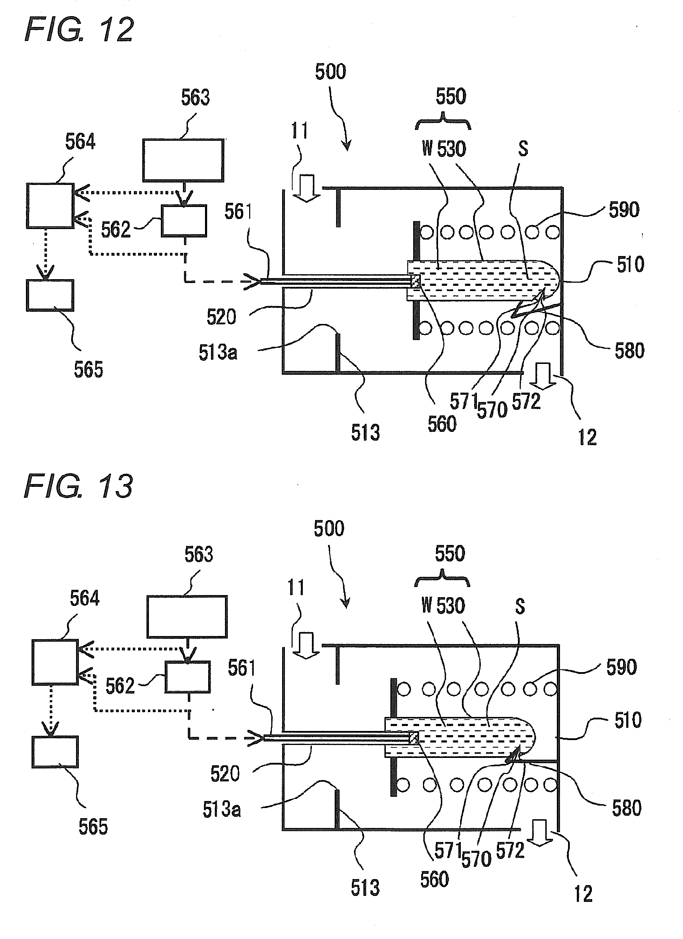

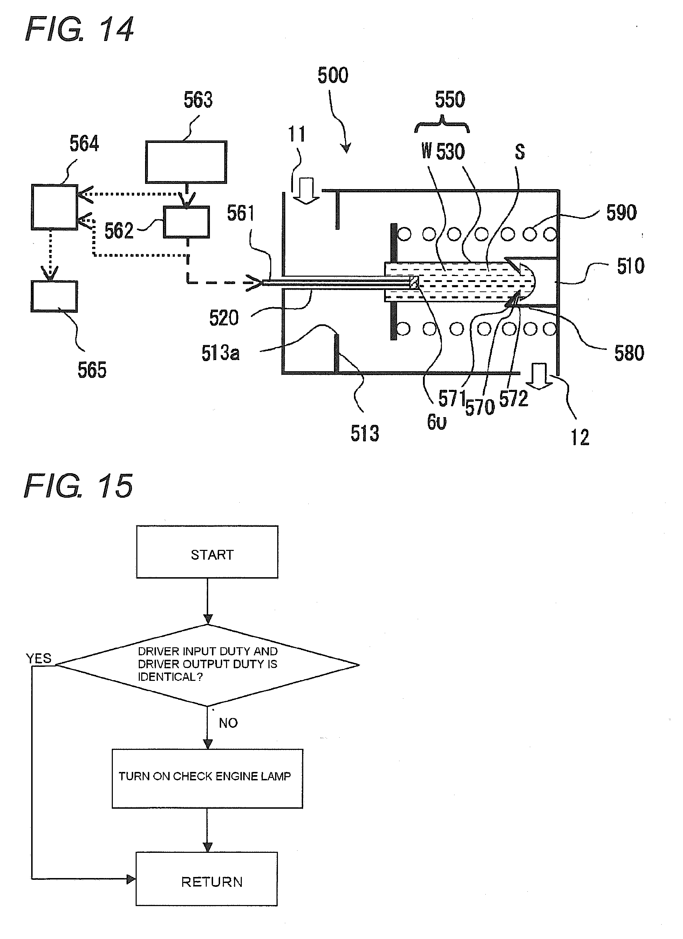

Fig. 10 is a diagram schematically illustrating a valve-closed state of the fluid control valve 500 according to the fifth illustrative embodiment disclosed here. Fig. 11 is a diagram schematically illustrating a valve-opened state of the fluid control valve 500 according to the fifth illustrative embodiment disclosed here. Fig. 12 is a diagram schematically illustrating an abnormal state of the fluid control valve 500 according to the fifth illustrative embodiment disclosed here. Fig. 13 is a diagram schematically illustrating a locked state of the fluid control valve 500 according to the fifth illustrative embodiment disclosed here. Fig. 14 is a diagram schematically illustrating a fluid control valve to show a modified embodiment of the locking structure. Fig. 15 is a flowchart illustrating a control flow of the fluid control valve 500 according to the fifth illustrative embodiment disclosed here.

The fluid control valve 500 according to the fifth illustrative embodiment is also used in the engine cooling circuit C as shown in Fig. 1.

The fluid control valve 500 includes a housing 510 having an inlet port 11 formed at one end and an outlet port 12 formed at the other end, and the housing 510 is provided with a partition 513 having a through-hole (flow passage) 513a penetrating a central portion thereof between the inlet port 11 and the outlet port 12. The cooling water is circulated from the inlet port 11 to the outlet port 12 through the through-hole 513a.

A cylindrical piston 520 is fixed to the inside of the housing 510, and is extended to protrude through the through-hole 513a. The piston 520 is provided at a tip end portion thereof with a heating element 560 which generates heat by electric current supply. An electric cable 561 which supplies an electric current to the heating element 560 passes through the piston 520, and is led out from the housing 510, with one end of electric cable being connected to the heating element 560.

The other end portion of the electric cable 561 is connected to a driver 562, and the driver 562 is connected to an ECU 563. The driver 562 receives a control signal having a duty ratio from the ECU 563 to output (supply) an electric current having the same duty ratio as the control signal to the heating element 560 via the electric cable 561 as an output signal. A determining device 564 is connected to the upstream and the downstream of the driver 562 to detect the control signal and the output signal and then determines whether the control signal is identical to the output signal. The determining device 564 is connected to a check engine lamp 565 which is turned on when the control signal is not identical to the output signal.

A substantially cylindrical case 530 with bottom is extrapolated to the tip end side of the piston 520 such that the cylindrical case 530 can be moved relative to the piston 520, in which the piston 520 penetrates through one end portion of the cylindrical case 530 to define a space S. The space S is filled with thermally expandable wax W A temperature sensing part 550 is configured by the case 530 and the wax W The wax W is heated and expanded by the heating element 560, and thus the case 530 is moved in a direction away from the piston 520, so that the temperature sensing part 550 operates. The tip end side of the case 530 is provided with a locking groove 570 having a wedge shape, which includes a slope surface 571 inclined toward an outer circumferential direction and a fixing side of the piston 520, and a locking surface 572 extending in an outer circumferential direction. Alternatively, the locking groove 570 may be provided on a partial portion or whole circumference of the case 530.

A locking claw 580 is fixed to a side opposite to the side to which the piston 520 is fixed in the housing 510, and is formed by bending the tip end portion of the piston 520 side into a substantially J-shaped, L-shaped or acute angular section. The locking claw 580 is fixed to the side of housing 510. When the valve body 540 is moved (operates) by a predetermined amount in the direction to open the through-hole 513a, the locking claw 580 is locked (held) to the locking groove 570. It is preferable that the locking claw 580 is made of an elastic material which can be elastically deformed. Herein, the term "predetermined amount" means a moving amount (e.g., a lift amount) of the valve body 540 at an abnormal time which exceeds an operation position of the valve body 540 at a normal time.

The circular valve body (valve part) 540 is fixed to the outer circumference of the case 530 such that the valve body 540 is integrally moved with the case 530, and has the diameter larger than an inner diameter of the through-hole 513a to open and close the through-hole 513a.

The case 530 is provided with a coil spring 590 at an external side of the case 530 in a radial direction. One end portion of the coil spring 590 to urge the valve body 540 is engaged with the valve body 540, and the other end portion is engaged with the housing 510. The coil spring 590 urges the valve body 540 toward a partition 513 to close the through-hole 513a.

Next, the operation of the fifth illustrative embodiment will now be described.

In a case where heating of a vehicle interior by a vehicle interior heater 5 is required after engine starting while the engine 1 is cold, an electric current is supplied to the heating element 560 via the electric cable 561, so that the heating element 560 generates heat. The wax W filled in the space S of the case 530 is heated by the heating of the heating element 560, and thus the temperature of the wax W is raised so that the wax W is expanded. By the expansion of the wax W, the case 530 is moved relatively to the piston 520 in the direction which comes away from the piston 520 to enlarge the space S, and thus the valve body 540 fixed to the outer circumference of the case 530 is moved in the direction which comes away from the partition 513. As a result, the valve is changed from the valve-closed state shown in Fig. 10 to the valve-opened state shown in Fig. 11. Due to the movement of the valve body 540, the through-hole 513a is opened to allow the cooling water to flow. Consequently, the cooling water is circulated to the vehicle interior heater 5, the temperature of which is raised, so that the vehicle interior is warmed.

In the meantime, for example, when the output signal from the driver 562 to the heating element 560 is not identical to the control signal from the ECU 563 to the driver 562, for example, when the duty ratios are not identical to each other, such that an excessive electric current abnormally flows in the heating element 560, the case 530 moves beyond the locking claw 580. After that, as shown in Fig. 12, the case 530 abuts against the housing 510. If the case 530 abuts against the housing 510, since the wax W filled in the case 530 is continuously expanded, regardless of the fact that the space S is not expanded, the wax W leaks out from the seal portion between the piston 520 and the case 530. In a case where the wax W leaks out from the case 530, if there is no locking claw 580, the valve body 540 closes the through-hole 513a by the urging of the coil spring 590, thus stopping the flow of the cooling water and potentially overheating the engine 1.

However, in the fifth illustrative embodiment, the locking groove 570 of the case 530 which is integral with the valve body 540 moving in the direction for closing the through-hole 513a by the urging of the coil spring 590 is locked to the locking claw 580, as shown in Fig. 13, so that the valve body 540 is held in the valve-opened state. As a result, even in a case where the wax W leaks out from the case 530, the flow of the cooling water is maintained, and thus, for example, the engine 1 can be prevented from overheating.

In order to reliably hold the locking state (holding state) of the locking groove 570 and the locking claw 580, as shown in Fig. 14, the locking claw 580 and the locking groove 570 may be provided by plural at regular intervals in the circumferential direction of the case 530. The locking groove 570 may be directly formed at the case 530 by press forming or roll forming, or a cap 531 (shown by a broken line in Fig. 10) with the locking groove 570 formed thereon, which is formed separately from the case 530, may be fixed to the case 530 by fusing or press working. Accordingly, for the case (the valve body) with no locking groove, it is not necessary to provide a separate case with the locking groove.

Fig. 15 is a flowchart of controlling the fluid control valve 500, in particular, a flowchart of turning on a check engine lamp 565 when the control signal and the output signal at the upstream and the downstream of the driver 562 are not identical to each other. When it is required to warm the vehicle interior by the vehicle interior 5 (START), it is determined whether a driver input duty (control signal) and a driver output duty (output signal) are identical to each other. If the control signal and the output signal are identical to each other, the operation proceeds to RETURN. If the control signal and the output signal are not identical to each other, the check engine lamp 565 is turned on, and then the operation proceeds to RETURN. In this manner, for example, at the time where the abnormality occurs, that is, the excessive electric current flows in the heating element 560, a vehicle crew member can recognize the illumination of the check engine lamp 565, and thus can stop the warming of the inside of the vehicle interior by the interior heater 5 or the engine 1. As a result, it is possible to prevent the wax W filled in the case 530 from leaking from the seal portion between the piston 520 and the case 530, and to implement measures to deal with the abnormality.

It is noted that in the fifth illustrative embodiment, the fluid control valve 100, 200, 300, 400 according to the first to fourth illustrative embodiments can be used instead of the fluid control valve 500, by providing the locking groove 570 and the locking claw 580 thereto.

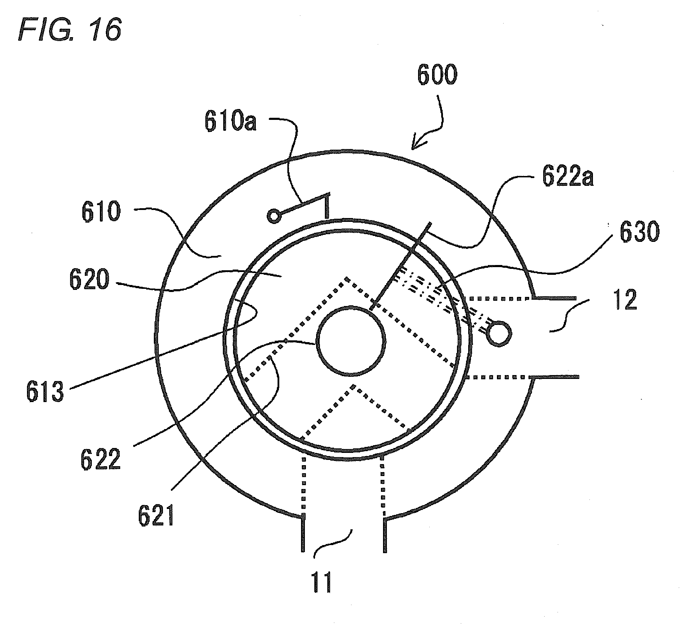

Next, a sixth illustrative embodiment disclosed here will now be described with reference to Figs. 16 to 18.

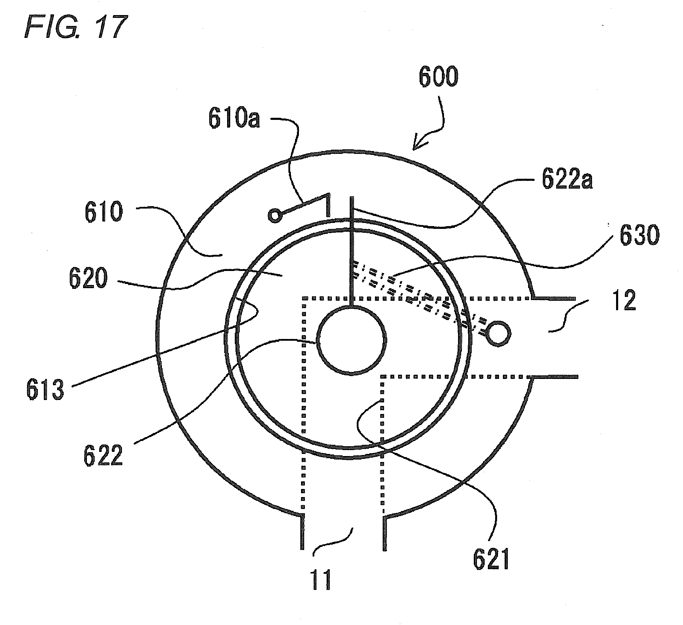

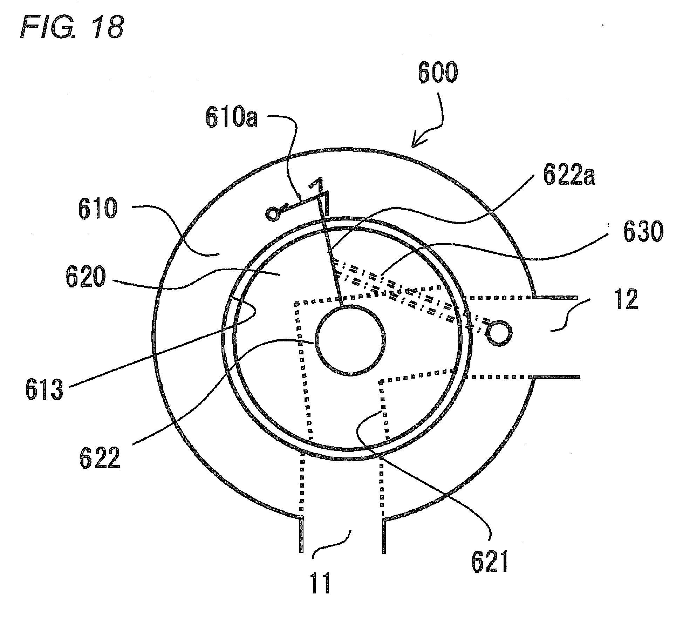

Fig. 16 is a diagram schematically illustrating a valve-closed state of a fluid control valve 600 according to the sixth illustrative embodiment disclosed here. Fig. 17 is a diagram schematically illustrating a valve-opened state of the fluid control valve 600 according to the sixth illustrative embodiment disclosed here. Fig. 18 is a diagram schematically illustrating the state in which a valve body 620 is locked at an opened state when a valve part operates (rotates) in a direction of opening a flow passage by a predetermined amount.

The sixth illustrative embodiment has a structure in which the valve body 620 is rotated to interrupt (open and close) the flow passage, as compared with the fifth illustrative embodiment in which the valve body 540 is axially moved to open and close the flow passage.

The fluid control valve 600 includes a case 610 provided with an inlet port 11 and an outlet port 12 and covered by a cover (not illustrated), which is provided with a through-hole formed at a center thereof, to form a cylindrical space 613, and a cylindrical valve body 620 rotatably provided in the cylindrical space 613 and having a rotation shaft 622, which is inserted in the through-hole of the cover, at a center formed with a bent flow passage 621.

The rotation shaft 622 is provided with a locking protrusion 622a which extends in a radial direction. The case 610 is provided with a locking claw 610a, to which the deformable locking protrusion 622a is locked. The locking claw 610a has a tip end portion which is bent to have a substantially J-shaped, L-shaped or acute cross section. A magnet (not illustrated) is provided in the valve body 620, and is rotated by an electromagnet (not illustrated) which is provided in the case 610 to interrupt the inlet port 11 and the outlet port 12 via the flow passage 621 and thus open and close the valve.

When the electromagnet is OFF, the valve body 620 is urged in a clockwise direction by an urging unit 630, one end portion of which is fixed to the case 610 and the other end portion of which is fixed to the locking protrusion 622a, so that communication between the inlet port 11 and the outlet port 12 is interrupted (valve is closed). When the electromagnet is ON, the valve body 620 is rotated in a counterclockwise direction against the urging force of the urging unit 630, so that the inlet port 11 and the output port 12 are communicated with each other via the flow passage 621 (valve is opened). Alternatively, in order to rotate the valve body 620 in the counterclockwise direction, bimetal, thermal wax or the like may be used instead of the magnetic force.

A driver (not illustrated) controlling the electromagnet outputs an abnormal output signal with respect to an input signal (e.g., duty ratio) from an ECU (not illustrated), for example, an output signal which interrupts an electric current after an excessive electric current flows due to a duty ratio which is different from the input duty ratio. When the valve body 620 operates from a valve-opened state shown in Fig. 17 in a direction for opening the flow passage by a predetermined amount shown in Fig. 18, the locking protrusion 622a is locked to the locking claw 610a, and the valve body 620 is held in the open state. As a result, even in a case where the driver is not in the normal state, the circulation of the cooling water is maintained, for example, thereby preventing the engine 1 from being overheated.

It is provided illustrative, non-limiting embodiments as follows:

A fluid control valve interposed in a fluid flow passage, includes: a temperature sensing part which is provided in a fluid of the fluid flow passage, and which is configured to operate based on a temperature of the fluid; a heating element which is configured to heat the temperature sensing part; and a shielding part which is capable of shielding the temperature sensing part from the fluid.

A fluid control valve includes: a temperature sensing part which is provided in a fluid flow passage through which a fluid flows, and which is configured to operate based on a temperature of the fluid; a valve part which is configured to open and close the flow passage by an operation of the sensing part; and a shielding part which is capable of shielding the temperature sensing part from the fluid.

A fluid control valve interposed in a fluid flow passage through which fluid flows, includes: a valve part which is configured to operate to open and close the fluid flow passage; and a holding member which is configured to hold the valve part in an opened state when the valve part is moved by a predetermined amount in a direction of opening the flow passage.

The principles, preferred embodiment and mode of operation of the present invention have been described in the foregoing specification. However, the invention which is intended to be protected is not be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within spirit and scope of the present invention as defined in the claims, be embraced thereby.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A fluid control valve (100, 200, 300, 400, 500, 600) interposed in a fluid flow passage (C1), the fluid control valve (100, 200, 300, 400, 500, 600) comprising:
a temperature sensing part (50, 550) which is provided in a fluid of the fluid flow passage, and which is configured to operate based on a temperature of the fluid;
a heating element (60, 560) which is configured to heat the temperature sensing part; and
a shielding part (70, 241, 370, 470) which is capable of shielding the temperature sensing part (50, 550) from the fluid.

2. The fluid control valve (100, 200, 300, 400, 500, 600) according to claim 1,
wherein the shielding part (70, 241, 370, 470) shields the temperature sensing part (50, 550) from the fluid when the temperature sensing part (50, 550) is at a predetermined position.

3. The fluid control valve (100, 200, 300, 400, 500, 600) according to claim 1 or 2,
wherein the shielding part (70, 241, 370, 470) includes a cover member which covers the temperature sensing part (50, 550).

4. The fluid control valve (100, 200, 300, 400, 500, 600) according to claim 3, further comprising:
a housing (10, 510, 610) formed with a flow passage though which the fluid flows; and
a valve part (40, 240, 341, 440, 540, 620) which is moved by an operation of the sensing part (50, 550) to open and close the flow passage,
wherein the temperature sensing part (50, 550) is movable integrally with the valve part (40, 240, 341, 440, 540, 620), and the cover member is fixed to the housing (10, 510, 610).

5. The fluid control valve (100, 200, 300, 400, 500, 600) according to claim 4,
wherein the cover member causes the temperature sensing part (50, 550) to expose to the fluid when the valve part (40, 240, 341, 440, 540, 620) opens the flow passage to allow the fluid to flow.

6. The fluid control valve (100, 200, 300, 400, 500, 600) according to claim 4 or 5, further comprising:
a holding member (570, 580, 610a, 622) which is configured to hold the valve part (40, 240, 341, 440, 540, 620) in an opened state when the valve part (40, 240, 341, 440, 540, 620) is moved by a predetermined amount in a direction of opening the flow passage.

7. The fluid control valve (100, 200, 300, 400, 500, 600) according to claim 6,
wherein the holding member (570, 580, 610a, 622) is provided to a cap which is a separate member from the valve part, and fixed to the valve part (40, 240, 341, 440, 540, 620).

8. The fluid control valve (100, 200, 300, 400, 500, 600) according to any one of claims 4 to 7,
wherein the valve part (40, 240, 341, 440, 540, 620) is provided rotatably to open and close the flow passage.
